# EUROPEAN PATENT APPLICATION

(11) **EP 1 574 970 A1**
(43) Date of publication of application: **14.09.2005**
(21) Application number: 04290632.1
(22) Date of filing: 09.03.2004
(51) Int. Cl.: G06F 17/30

(54) **Computer program for accessing information records of different applications**

(71) Applicant: Exalead, 75019 Paris (FR)
(72) Inventor: Bourdoncle, Francois, 75014 Paris (FR); Douetteau, Florian, 75011 Paris (FR)
(74) Representative: Cabinet Hirsch

(57) **Abstract**

The invention is directed to a program for accessing information records on a computer (10), the program being adapted for operating on the computer and comprising :
- an indexer (16) adapted to build an index (14) of information records stored in at least two information systems (121, 122, 123) present on the computer;
wherein an information system provides access to information records using at least an interface such as a user interface, an application programming interface, or a procedure call interface;
- an agent (18) adapted to receive requests from a terminal (20) remote from the computer and to serve said requests using said index.
A person travelling is thus able to get access to his or her own information stored on his or her personal computer at home or at work, using for instance another computer, a personnal digital assistant (PDA), a smartphone. It can furthermore act on these information records, using the service available on his local computer. It can thus reply to an email, delete or move a file, cancel an appointment, or get a local copy of mp3 file he owns on its local computer.

## Description

The invention relates to the field of computer programs, and more specifically to a program for accessing information records on a computer.

Many computers hardware and operating systems are built in a way that makes it possible to communicate with other computer devices, and receive request and orders from them. However, information systems of the operating system are not always architectured to be used from a remote computer. Even when it is possible to use individually information systems from the outside, there is no way to access all information records of any of the computer local information system, from a remote device, by querying an unique index.

Remote desktops software, such as rdesktop, Citrix Remote Desktop (trademark), XFree86 (trademark), Microsoft Windows (trademark) remote desktop feature, provides a way to access information records of the computer from a remote device. To do so, they emulate the native graphical interface of the computer remotely, but do not provide a unique index, accessible remotely, that permits to access information records from multiple applications.

A particular kind of software relates to controlling a computer using a device with limited input capabilities, such as a remote control device (US Patent 6,313,851, US Patent 5,990,890). However these software provide access to the applications of the computer themselves, they do not provide access to information records of the different applications through a unique index.

A server software provides access to some of the information records on a computer, but provide access to either information records of only one kind of application on the server, or do not provide a unique index to access information records of multiple applications at the same time. For instance a server software that provides a Web front-end for processing train reservation requests from clients, can provide indirect access to information records of several distinct databases applications of the same computer (a train schedule database, a client database, a reservation database), but it does not provide a unique index to access information records of the database. Another example is a webmail service (such as Eudora webmail (trademark), SquirrelMail, IMP Webmail, Microsoft Outlook web access) that only provides remote access to information records of a particular kind of application

Many applications provide remote access to their information records, some of them including retrieving these information records by textual search (for instance Microsoft Outlook, Microsoft Word). However they do not allow accessing to any of the information records at the same time.

A Peer-to-peer software allows users to share their files from one computer to another. To access files, a search service that allow to request files by name, size or kind is provided. Such a software intended use is to distribute files among multiple users, but could be used, theoretically, by a single user to access remotely informations records of its computer. However a peer to peer software only gives access to one particular kind of information records, namely the files of a file system, and does not permit to request information records according to their textual content.

Instant messaging software (such as Microsoft Messenger (trademark), AOL instant messaging (trademark), ICQ (trademark), Yahoo messenger (trademark) allow users to enter some of their information records with other users. However they do not provide access to any information of the application

Web Search engine (such as Google (trademark), MSN search (trademark), All the Web(trademark) provides a way to access information records from an unique index. However they do provide access only to information records that are accessible from a remote computer, through the HTTP, FTP or NNTP protocols.

There is a need for a program permitting to access information records from any type of terminal. According to the invention, there is provided a program able to adapt to new types of terminal (PDA, mobile phones,...) and to the constraints of remote networking (limited bandwidth, high latency) which provide a unified way to access information records from the computer. The program makes it further possible to execute from the remote terminal actions on the information records thereby accessed. These actions are executed by emulation or by remote execution of services that the application of the computer locally provides. The software adapts itself automatically to the local applications to find the information records that can be remotely accessed and the actions that can be executed on them. To do so, it imports configuration information for embedded applications, either from application proprietary files, or the from the operating system central configuration database.

More particularly, the invention relates to a program for accessing information records on a computer, the program being adapted for operating on the computer and comprising :
- an indexer adapted to build an index of information records stored in at least two information systems present on the computer;
wherein an information system provides access to information records using at least an interface, such as a user interface, a programming interface or a procedure call interface,
- an agent adapted to receive requests from a terminal remote from the computer and to serve said requests using said index.

In one embodiment, the indexer adds metadata to information records.

In one embodiment, the agent includes action possibility when serving request, for at least one information record.

The action possibility may be function of content of information record, or function of metadata, or function of the terminal. The action may be executable locally on the terminal, or executable by the agent on the computer.

In one embodiment, the action is executed by using native service of information system.

In one embodiment, the agent is adapted to emulate action on the computer.

In one embodiment, the action comprises previewing, deleting, forwarding, replying, saving, uploading, downloading, renaming, moving.

In one embodiment, the agent serves requests to authorised terminal.

In one embodiment, the agent serves requests according to information record type.

In one embodiment, the agent serves requests according to action possibility of the terminal.

In one embodiment, the indexer is further adapted to index transient information records in the index.

In one embodiment, the agent is an http server adapted to provide the terminal with a view of an indexed information record.

Further, the invention relates to a multiple system comprising a network of computers, each computer with an agent, the program as described above being adapted to operate on the computers, wherein the agents are adapted to communicate with other agents.

In one embodiment, a request received by one agent is forwarded to other agents.

In one embodiment, the forwarding agent is adapted to aggregate information records before serving the request.

In one embodiment, the agent and indexer are adapted to read information systems configuration to find the information request or action possibility to index and serve upon request.

The invention relates also to a protocol operating on a multiple system as described above, the protocol comprising the step of
- declaration on one computer of a wish to share some information records;
- sending by an agent of said computer a request to an agent with whom information record is to be shared, including network address of agent.

In one embodiment, the request includes an access right.

In one embodiment, the protocol further comprises a step of forwarding a request received by the agent with whom information record is to be shared, when the sharing is accepted.

A program embodying the invention will now be described, by way of nonlimiting example, and with reference to the accompanying drawings, where :
- figure 1 is a schematic view of building an index;
- Figure 2 is an example of a view of results provided by the program;
- figure 3 is an example of information records accessed from a computer at distance;
- Figures 4 and 5 are examples of multiple systems comprising a network of computers.

The invention provides a program for accessing information records on a computer, the program being adapted for operating on the computer. The program comprises an indexer adapted to build an index of information records stored in at least two information systems present on the computer, an information system providing access to information records using at least an interface such as an user interface, an Application Programming Interface (API), a Local Procedure Call system (LPC) or a Remote Procedure Call system (RPC). The program comprises also an agent adapted to receive requests from a terminal remote from the computer and to serve said requests using said index. The program according to the invention offers the possibility for the user to have a remote access to the content of his or her computer. The program adapts itself to the configuration and setup of the local computer thereby capitalizing on the configuration and setup already done on the computer by its user

The computer is a personal computer with a memory, a processing unit adapted to access said memory and a network access. The computer may further have peripherals such as a screen, a keyboard, a mouse. Although the computer is usually locally operated, the program makes it possible to consult one's own computer remotely; it is therefore not required with the program to be in front of the computer to consult the data stored on the computer. A person travelling is thus able to get access to his or her own information records stored on his or her personal computer at home or at work. Furthermore, one can get access to one's own computer through a terminal that is not necessarily a computer but any kind of terminals, e.g., mobile phone, PDA, game console...

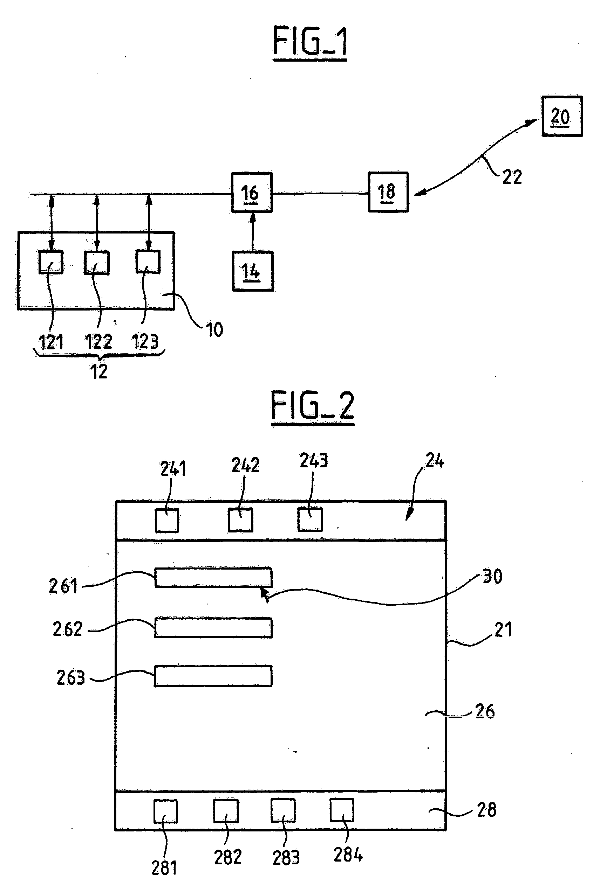

Figure 1 shows a schematic view of how the index is built. The computer 10 comprises the memory. The information system 12 is present on the computer 10 as being stored in the memory. The information system has information records. Starting from the information records, the indexer 14 is adapted to build the index 16 of information records. The computer is provided with an agent 18, such as an http server, adapted to receive requests 22 from a terminal 20. More particularly, the agent 18 is adapted to serve said request using the index 16.

The information systems are any type of application software and the documents associated thereto. For example, a kind of application of an information system may be a word processing package such as Microsoft Word (trademark) helping a user to write or read a text, electronic messaging software such as Microsoft Outlook (trademark) helping the user to deal with emails, contacts, dates, or media applications providing music, images or video files. The application of the information system may also be embodied as an electronic diary. Preferably the information systems are of different types; they may be different in the way of storing the information records, or may be different in the way of getting access to the information records. The computer has at least two information systems, but may have more information systems 121, 122, 123.

The information records are stored in the information system. The information records are data of interest for the user. According to the above given examples, the information system Microsoft Word has information records in the form of documents. Concerning the electronic messaging software Outlook Express, the information records are emails, the recipient and the originator of the emails, date of the email, attached files, address, contacts or dates... Concerning the electronic diary, the information records may be solely dates, the persons with whom appointments are made, and so on. Concerning the media application, the information records are the media files. The content of the information records differs from one information record to the other. For example, the content of an information record in the form of an email or a document of a word processing package may be a text; the content of an information record in the form of a date or of a contact is solely the date or the contact itself.

In one embodiment, the indexer may also add metadata to the information records. This has the advantage of completing the index and giving new criteria giving access to the information records. Metadata are information about the information records. For example the metadata are information about the storage location of information records, information about the size or the date of modification or creation of documents processing the information records. For media files, such as MP3 files (music), JPEG files (images), video files, the metadata may be the author, the date of creation, the album, the size, the duration.. For emails the metadata may include the author, the recipients, the date, the title. For any kind of file stored on a file system the metadata may be the folder in which the file is stored, the date of creation, the date of modification, the date of last access, the size.

The information system provides access to information records using at least an interface. The interface may be a user interface such as a graphic user interface, or an application programming interface (API), or a remote procedure call interface (RPC), or a local procedure call interface (LPC). For instance, information records of an application such as Microsoft Outlook (trademark) can be accessed either from the native graphical user interface, or from a vendor proprietary programming API used to read Microsoft Outlook data as they are stored on the file system, or, either locally or remotely by contacting a running instance of the Microsoft Outlook application through its COM (trademark) interface.

The indexer 14 is able to build the index 16. The indexer is adapted to build an index of information records of all of the information systems present on the computer. The indexation of information records permits the identification or characterization of the information records. The index 16 is thus a database giving access to the information records stored in the information systems, whatever the information system processing the information records. More particularly, the index bypasses the information system to access the information records. Thus, the index makes it possible to have direct access to the information records. In other words, the index offers the possibility of having unified access to all the information records stored in the computer : whatever the information systems the information records are processed with, the user may be provided with the information records by solely entering a keyword corresponding to the information records.

The indexer may automatically build the index 16; the advantage is that a novice user is able to simply use the program as it is implemented on the computer. It is also possible for the user to configure his or her own index by choosing himself the various criteria for indexing the information records; the advantage is that the user knows the key words to access the information records in an efficient manner. Further, it is possible to display the index, thus permitting to scroll the information records and choose the key words in a given data base; this has the advantage of avoiding imagining how the information index is built, that could render the searching more efficient.

The agent 18 permits to connect the computer 10 to a network, especially to the Internet. The agent 18 renders remote access to the computer 10 possible. The terminal 20 gives access to the computer through the agent 18. The terminal 20 is of any type, such as a PDA, a pocket computer, a mobile phone, ... The terminal 20 is activated through its interaction devices such as keyboards, screen, scroll mouse... The terminal is able to send a request 22 in a known manner, such as a text message. Through the request 22 received by the agent, the terminal 20 enters into communication with the computer 10. The request is for example for accessing information records stored in the computer 10. The request may take the form of a key word entered in the terminal and corresponding to an information record. The agent 18 receives the request and, by using the index 16, gathers a list of hits (information records) corresponding to the request. The agent 18 might serve the request by retrieving an email, a date, or a document to the terminal 20.

The terminal used being of any kind, it may not have the information systems processing the information records in the memory 10. Nevertheless, the program bypasses the information systems to access the information records and information records are therefore retrieved to the terminal independently of the information system. Thus the program permits to process the retrieved information records on any type of terminals.

In a preferred aspect of the invention, the agent includes action possibility 23 when serving the request, for at least one information record. The program permitting to get access to information records stored in the computer whatever the information system used, an action possibility is also sent to the terminal to act on at least one information record. In other words, with the action possibility sent to the terminal, it is possible for the user of the terminal 20 to act on the information records as if he were sitting in front of the computer and if he were processing the information records with the information systems. Alternatively, the agent may include several action possibilities 23 when serving the request; this has the advantage of offering to the user a larger choice when processing the information record from the terminal. For example, the action possibility comprises previewing, deleting, forwarding, replying, saving, uploading, downloading, renaming or moving.

The action possibility may be function of the content of information record. In other words, depending upon the information record served by the agent 18 to the terminal, the agent 18 also sends to the terminal an action possibility that permits to act on the information records. The action possibility corresponds to what may usually be done on the information record with the information system that stores the information records. For example, if an email as information record is retrieved from the computer, the agent 18 may also send action possibility like "display", "reply", "forward", "print" or "delete". This kind of action possibilities are usually used to act on emails. Thus, the user of the terminal 20 is informed of a new email present in the computer and is able to act on this email. Furthermore, when several action possibilities are included by the agent when serving the request, the action possibilities are also function of the information record. Thus, account is taken of the bandwidth of the terminal that differs from one terminal to another. Less action possibilities are send to a terminal with a narrow bandwidth than to a terminal with a large bandwidth.

Further, the action possibility may be function of the metadata. This has the advantage of offering to the user of the terminal other types of action on the information records.

Further, the action possibility may be function of the terminal. In other words, depending upon the terminal 20 used, the agent 18 sends an action possibility that can be performed with the terminal 20. For example, if an email as information record is retrieved on a mobile phone, the agent 18 may send an action possibility like "reply" or "delete" and not an action possibility like "print" that can probably hardly be done with the mobile phone. This has the advantage of being able to act on the retrieved information record according to the interaction device (screen, keyboard, mouse) of the terminal, and regardless of which information systems are present on the terminal. The program has the further advantage of being able to retrieve information record on terminals that may be different from one another.

In one embodiment, the action possibility is executable locally on the terminal. The user performs the action with the information records without the help of the computer. This has the advantage of avoiding sending a new message to the computer. Further, it simplifies the processing of the information record and renders the terminal autonomous.

Alternatively, the action possibility is executed by using native service of information system. Thus, the terminal sends a new request requesting the computer to process the information record. For example, for an information record in the form of an email retrieved on the terminal with the action possibility "reply", the terminal sends to the computer the order of replying the email. The agent processes the request, contact the local email application, and asks the application to send the email. This avoids configuring the terminal and permits the processing of the information record although the terminal does not have interfaces to process the action .

In another aspect of the invention the agent 18 is adapted to emulate action on the computer. For example, for an information record in the form of an email retrieved on the terminal with the action possibility "reply", the terminal sends to the computer the order of replying the email. The agent 18 processes the request, and replies to the email itself. This avoids contacting the local application to process the reply.

In one embodiment of the invention, the agent 18 includes the action possibility "preview", on supported information records types and terminal types. The previewing action consists in sending to the terminal a representation of the information record, which is eventually partial or degraded compared to the original information record. This representation is adapted to the terminal display and bandwidth constraints. For instance, in the case of a word processor document, the preview may consist in the textual content of the document, without formatting. In the terminal display capability is limited, the preview may be limited to portions of the document that are relevant regarding the textual query that had been sent to the agent to find this information record.

Figure 2 shows a view of results provided by the program on the terminal. In the proposed example, it is assumed that the terminal 20 is provided with a screen 21. The results may be viewed on the screen 21 in the form of several frames 24, 26, 28. First frame 24, at the top of the screen, may indicate the key words 241, 242, 243 previously entered when formulating the request on the terminal 20. The second frame 26 contains the hits 261, 262, 263 (information records) that are served by the agent 18. The results may be displayed in several manners, according to the accuracy of the displayed information records. A single line 261, 262, 263 as represented in figure 2 may represent a hit. Alternatively, a short abstract in the form of an extract of sentences or part of sentences of the information records may be displayed. The display of the results depends on the type of terminal used and especially its size. More or fewer frames may be displayed. A cursor 30 may be displaced to select one of the retrieved information records. The third frame 28 is a tool bar indicating the action possibilities 281, 282, 283, 284 for acting on the retrieved information records. The action possibilities displayed in the frame 28 may be the same for all the retrieved information records; preferably the action possibilities for acting are adapted to the information records selected by the cursor 30. For example, if a date and an email are retrieved on the terminal, only action possibilities like "delete" and "modify" may be displayed when the cursor 30 is pointing at the date whereas action possibilities like "reply", "forward" and "save" may be displayed in the frame 28 when the cursor 30 is pointing at the email.

In one embodiment of the invention, said program is further adapted to acquire automatically configuration information from information systems of the local system. The agent and indexer are adapted to read information systems configuration to find the information request or action possibility to index and serve upon request. To do so, it may either read the configuration files of the information system presented on the file system, or query the operating system central configuration base (Windows Registry, in the case of the Microsoft Windows operating system), or use any API or procedure call mechanism through which the application makes its configuration information available. This configuration information is used by the indexed to retrieve relevant information records from the application This configuration information is used by agent to find which action possibility may be assigned to different kind of information records of the application.

One may exemplify this with an information system like an electronic messaging system retrieving emails from a server. When this information system is implemented on the computer, configuration information like the POP (Post Office Protocol), SMTP (Simple Mail Transfer Protocol) protocol, password or account name are required. Once the computer is configured, emails are regularly retrieved on the computer from the ISP by the electronic messaging systems and thanks to the configured information system, it is possible to act on the emails, such as replying to the emails from the computer. When using the terminal and the program of the invention, it is possible to draw profit from the configuration work on the computer and derive the configuration on the terminal. Indeed, the above mentioned configuration information being associated to the emails when the latter are retrieved from the computer to the terminal, it is possible to act on the emails as if the user were acting on the emails in front of his computer. Alternatively, with the retrieval of configuration information, it is even possible with the terminal to access emails that are still with the Internet Service Provider. It is then possible for the user to capitalize on the configuration of the computer previously made on his personal computer.

In another aspect of the invention, the indexer is further adapted to index transient information records in the index. Transient information records are information records that are not stored in the information systems. In one sense, these kind of information records are dynamic, i.e., they only exist in the computer while being consulted or while being stored in cache in the computer. These information records are thus non permanent and are solely temporary present in the computer. Nevertheless, these transient information records are of interest for the user, and are thus indexed. This permits to retrieve on the terminal information records although they are stored elsewhere. For example, the user retrieves on his computer data of a remote database of a company while he consults the database. The data become information records and are therefore indexed in the index. These information records are thus retrievable afterwards on the terminal.

Indexing transient information records is particularly useful when the user is consulting web pages through the Internet. Pages consulted by the user with the computer are information records and only exist in the computer while being consulted. The pages being indexed, they are thus retrievable on the terminal. For example, Internet pages may be indexed through their URLs; starting from the retrieved URLs on the terminal, the pages are thus accessible from the terminal afterwards.

Another example of transient information records is the discussion of an instant messaging program. The history of these discussion are not always stored on the computer, but can be indexed by the indexer, to remain accessible from the terminal afterwards.

It is also possible to ensure a security policy to secure the access to the computer. More particularly, the access to the information records stored in the at least two information systems is secured. According to one aspect of the security policy, the agent serves a request solely to an authorised terminal. In other words, the agent serves only an authorised user that has a right access to information records stored in the at least two information systems. This ensures the safety of the information records. For example, the agent serves the request if the latter contains a password. In another aspect of the security policy, that can be combined or not to the former aspect, the agent serves request according to information record type. The information records may be classified according to their importance; some of them may thus be accessible solely through a password. For example, emails or documents processed by a word processing package may be protected by a password, while a contact or a date may be freely accessible. In a further aspect of the security policy, that can be combined or not to the former aspects, the agent serves requests according to action possibility of the terminal. This offers another means to secure the access to the information records and their processing. For example, the user has to be identified when an email is served by the agent with action possibility such as "reply". Indeed, replying to the email may be of importance, and the program permits the security of such action.

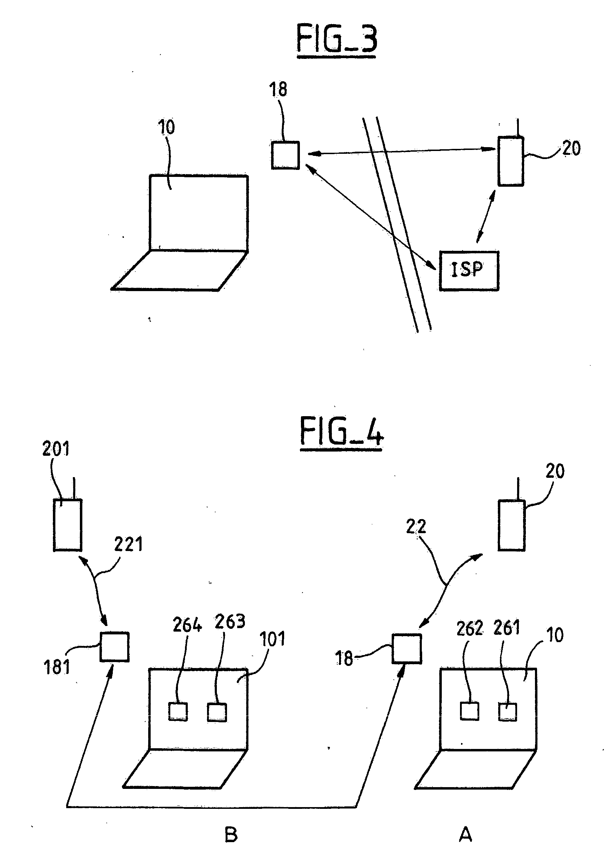

Figure 3 shows how the invention may be carried out. Computer 10 and terminal 20 are represented. The request 18 may be sent directly to the computer 10, for example through the Internet. The URL of the request should read http://mycomputer.ISP.com/. Alternatively, the terminal 20 connects to the computer via an ISP; the URL of the request should read http://ISP.com/mycomputer/.

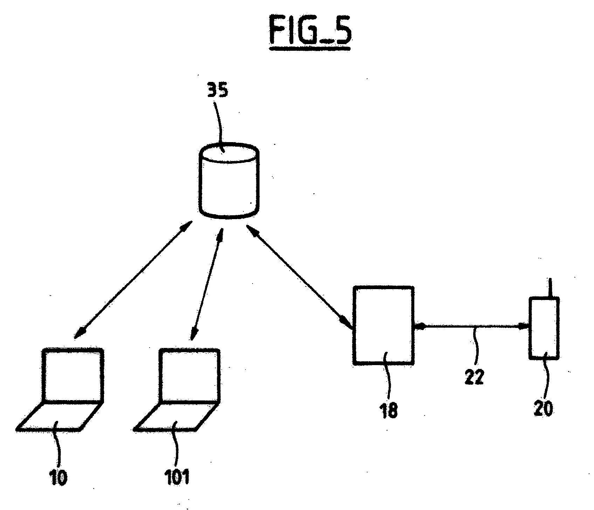

Figures 4 and 5 show multiple systems comprising a network of computers. Each computer comprises an agent and at least two information systems. The program as described above is adapted to operate on the computers. In that system, the agents are adapted to communicate with other agents. In this system, the user does not have only access to information records on his or her own computer, but may have access to shared information records stored on other computers. It is therefore possible to capitalize on the work of authorized members of a network.

Figure 4 shows an embodiment of implementation of a protocol operating on the multiple system, the protocol permitting a shared access to information records. Figure 4 shows firstly the agent 18 adapted to receive requests 22 from the terminal 20 and to serve said requests using an index of information records 261, 262. Terminal 20 and computer 10 belong to user A. On the other hand, figure 4 shows the agent 181 adapted to receive requests 221 from the terminal 201 and to serve said requests using an index of information records 263, 264. Terminal 201 and computer 101 belongs to user B. User A has access with terminal 20 to information records 261 and 262 stored on his own computer 10, while user B has access with terminal 201 to information records 263 and 264 stored on his own computer 101.

Further the information records of one computer belonging to one user may be accessed by the other user through his or her terminal. A request received by one agent may be forwarded to other agents. Thus, every agents receive the request permitting the retrieval of maximum of information records. This is exemplified in figure 4. Computer 101 makes a declaration of a wish to share some information records 263, 264. Then, agent 181 sends a request to agent 18 with whom information record is to be shared. This request can take, for instance, the form of a direct network request to agent 18, or the form of an email, sent to the email address of the user which will gain access. In this last case, agent 18 detects emails that contains sharing information while fetching mails from accounts that are accessible from the local computer. The use of email makes it possible to share information with another user without prior knowledge of the network address of its agent, the email address of the user being sufficient.

It is possible that all or only part of the information records of one computer belonging to one user may be accessed by the other user through his or her terminal. For example, user A may have access with terminal 20 only to information record 263 stored in computer 101. Once the sharing is accepted by user A, the protocol further comprises a step of forwarding a request 22 received by the agent 18 with whom information record is to be shared. The request includes also the network address of agent 181, thus permitting agent 18 to forward the request 22 to agent 181.

To authorize access to information record 263, 264 by user A the email includes an access right. The access right authorizes A to consult all or a given part of the index of information records 263, 284 when requested. The access right is for example a password. This access right is stored in computer 10; each time a request 22 is forwarded by agent 18 to agent 181, agent 18 browses not only the index of information records of computer 10 but also the authorized given part of the index of information records 263, 264 of computer 101.

Afterwards, forwarding agent 18 is adapted to aggregate information records before serving the request. Once the result of the searching is served to terminal 20, the user does not see any differences between the origin of the information records; this simplify the view of the information records on the terminal. This is particularly an advantage when the terminal has for example a small screen.

Of course, the same description may be done for user B authorized to consult a given part of the information records of computer 10. A cross authorization between users A and B may also be described as well as a cross authorization between members of a group of three or more users. Of course, the above description of the treatment of the information records on the terminal may apply here.

According to this embodiment, information records of both computers may divided into shared and private information records. The advantage of this embodiment is that each user has the benefit of the work done by the other user on his computer, in terms of gathered information records, computer configuration and so on.

Figure 5 shows another embodiment of a shared access to the information records. In the foregoing examples, the index was locally built; in this new example, a common index 35 of information records is built and accessible through a agent 18 by a terminal 20. Alternatively, an index is built for each computer, the common index 35 comprising all the indexes. The program operates on several computers. According to figure 5, computers 10, 101 are connected through an internal network, such as a corporate Intranet. The computers may be connected to the common index 35 indexing information records for the whole company. In one embodiment, the whole index 35 is accessible by each computer. The index is built with all information records contained in the computers, or alternatively, only with information records to be shared between the computers. In another embodiment, the index 35 may also be divided into parts; some parts may index private information records accessible only through a given computer, other parts may index shared information records accessible from any computer of said network. Further the user is able to access the index 35 through agent 18; he may access the whole or part of the information records. Access to the index 35 is preferably a secured access as described above.

## Claims

1. A program for accessing information records on a computer (10), the program being adapted for operating on the computer and comprising :
- an indexer (14) adapted to build an index (16) of information records stored in at least two information systems (121, 122, 123) present on the computer,
wherein an information system provides access to information records using at least an interface, such as a user interface, a programming interface or a procedure call interface,
- an agent (18) adapted to receive requests from a terminal (20) remote from the computer and to serve said requests using said index.

2. The program according to claim 1, wherein the indexer adds metadata to information records.

3. The program according to claim 1 or 2, wherein the agent includes action possibility when serving request, for at least one information record.

4. The program according to claim 3, wherein the action possibility is function of content of information record.

5. The program according to claim 3 or 4, wherein the action possibility is function of metadata.

6. The program according to claims 3 to 5, wherein the action possibility is function of the terminal.

7. The program according to claims 3 to 6, wherein the action is executable locally on the terminal.

8. The program according to claims 3 to 7, wherein the action is executable by the agent on the computer.

9. The program according to claim 3 to 7, wherein the action is executed by using native service of information system.

10. The program according to claim 3 to 7, wherein the agent is adapted to emulate action on the computer.

11. The program according to claims 3 to 10, wherein the action comprises previewing, deleting, forwarding, replying, saving, uploading, downloading, renaming, moving.

12. The program according to any preceding claims, wherein the agent serves requests to authorised terminal.

13. The program according to any preceding claims, wherein the agent serves requests according to information record type.

14. The program according to any preceding claims, wherein the agent serves requests according to action possibility of the terminal.

15. The program according to any preceding claims, wherein the indexer is further adapted to index transient information records in the index.

16. A multiple system comprising a network of computers, each computer with an agent, the program according to the preceding claims being adapted to operate on the computers, wherein the agents are adapted to communicate with other agents.

17. The multiple system according to claim 16, wherein a request received by one agent is forwarded to other agents.

18. The multiple system according to claim 17, wherein the forwarding agent is adapted to aggregate information records before serving the request.

19. The multiple system according to claim 18, wherein the agent and indexer are adapted to read information systems configuration to find the information request or action possibility to index and serve upon request.

20. A protocol operating on a multiple system according to claims 16 to 19, the protocol comprising the step of
- declaration on one computer (101) of a wish to share some information records (263, 264);
- sending by an agent (181) of said computer (101) a request to an agent (18) with whom information record is to be shared, including network address of agent (181).

21. The protocol according to claim 20, wherein the request includes an access right.

22. The protocol according to claim according to claim 20 or 21, wherein the protocol further comprises a step of forwarding a request (22) received by the agent (18) with whom information record is to be shared, when the sharing is accepted.

23. The program according to any preceding claims, wherein the agent is an http server adapted to provide the terminal with a view of an indexed information record.
